# EUROPEAN PATENT APPLICATION

(11) **EP 1 308 871 A2**
(43) Date of publication of application: **07.05.2003**
(21) Application number: 02257452.9
(22) Date of filing: 25.10.2002
(51) Int. Cl.: G06F 17/60

(54) **Controlling transactions**

(30) Priority: 02.11.2001 GB 0126384
(71) Applicant: Nokia Corporation, 02150 Espoo (FI)
(72) Inventor: Lukkaroinen, Mikko, 90150 Oulu (FI); Känsälä, Ilkka, 90570 Oulu (FI)
(74) Representative: Ruuskanen, Juha-Pekka

(57) **Abstract**

The disclosed arrangement provides a third party control on transactions between other parties. In the method a first transaction message is signalled between a first user equipment (11) and a second user equipment (10). The first transaction message is associated with a contract the users of the first and second user equipment are willing to enter. A second transaction message (3) based on the first transaction message is signalled to a third user equipment (12). The second transaction message is processed at the third user equipment. Based on the processing it is determined if the contract is acceptable. A third transaction message (4) generated based on the outcome of the determination is then signalled from the third user equipment.

## Description

The present invention relates to control of transactions, and in particular, but not exclusively, to provision of possibility to control transactions between two parties.

Electronic transactions may be accomplished by means of various user equipment such as cashier terminals, credit or debit card terminals, automatic teller machines and so on. Solutions wherein a user may perform a transaction by means of his/her computer terminal are also known.

In addition to fixed line terminals, i.e. user equipment connected to a fixed line data network (e.g. the Internet or a teller machine connected to a data network of a bank), a user may accomplish an electronic transaction by means of various mobile user equipment via a wireless interface. The mobile user equipment such as mobile phones, personal data assistants and portable computers are known. A mobile user equipment is typically provided with a capability of communication via a wireless interface with other devices such as a base station of a mobile telecommunication network or any other station. Any such mobile user equipment may be referred to as a mobile station. The mobile station can be adapted for voice, text message or data communication via the wireless link. The wireless link may be provided by means of a communication system such as a public land line mobile network (PLMN) or a local short range link.

Mobile stations are rapidly evolving such that much more services than just voice or data communication services are provided for the users thereof. The mobile station is thus transforming into a personal trusted device (PTD) with the capability to handle a wide variety of new services and applications. These include, without limiting to these services such as those enabling a user to accomplish various financial transactions by means of his/hers mobile user equipment.

In principle a user equipment such as a computer terminal or a mobile user equipment may be used for exchange of any transaction data via a data communication media. For example, any personal information required for a transaction may be exchanged between the parties of the transaction. The user equipment may be used e.g. for payment of bills and for other banking transactions, purchase of goods and services, for betting and so on. The transactions may also associate ticketing services, loyalty schemes, provision of a receipt, transactions associated with other financial services than pure banking, various other secure access based operations and so on.

Various proposals are known how to a party can accomplish a transactions such as a payment between him/her and another party e.g. by means of a mobile phone and/or other user equipment. The other party may be, for example, a shopkeeper, a vending machine, another user of a user equipment and so on.

In brief, a typical basic electronic transaction concept is that the user signals electronic transaction data from his/her user equipment which is then processed at an appropriate transaction processing entity such that the other party receives e.g. a payment in a manner intended by the user. To enable electronic transactions between two entities a common transaction mechanism is required. In general terms, a typical transaction mechanism can be defined to comprise features such as the communication media between the parties of the transaction, transaction protocols and parameters, content transfer and presentation formats, security mechanisms and other functions that may also associate with an electronic transaction between the parties.

A transaction can be performed in a local or in a remote environment. That is, the two parties may be physically close to each other or the parties can be remote, respectively. In both of these schemes appropriate transaction data is transmitted between a user equipment and a appropriate devices of another party of the transaction. In the local scheme it is possible to use either the communication system serving the user equipment for the signalling of the transaction data or the data can be signalled via a local or short range link, such as a local low power radio link (e.g. the Bluetooth™). If the parties are remote or any of the entities involved in the processing of the transaction data is remote, then use of a communication system is required for the signalling of the transaction data.

In principle a user equipment enabling electronic transactions can be used for all kind of payments or other electronic transactions. However, the Inventors have found that in some situations it might be advantageous if a third party could provide control on a transaction negotiated between other parties. For example, a parent may wish to control the spending of a child. In another example, an employer might wish to be able to could control in real time employees who are per se allowed to purchase goods and/or services by using post invoicing or direct mobile user equipment activated payment methods. The control could e.g. include controlling of the amounts spent, where the money is spent, control of the actual payments, and so on.

Some form control has been provided by usage limits or other similar means ensuring that only a certain amount of money can be spent. However, this does not solve the problem regarding how and/or where the money is spent.

If the third party wishes to control a payment transaction between two parties, this has required that the third party is either making the payment himself or that he is physically present when the payment is made. However, this is not always possible and/or may at least be difficult. For example, the parent may not always be with the child when he or she is in a shop.

Embodiments of the present invention aim to address one or several of the above problems, and to provide a feasible way for a third party to control transactions between two other parties.

According to one aspect of the present invention, there is provided a method for accomplishing a transaction between user equipment. The method comprises: signalling a first transaction message between a first user equipment and a second user equipment, said transaction message being associated with a contract the users of the first and second user equipment are willing to enter; signalling to a third user equipment a second transaction message based on the first transaction message; processing the second transaction message at the third user equipment and based on the processing determining whether the contract is acceptable; and signalling from the third user equipment a third transaction message generated based on the outcome of the determination.

According to another aspect of the present invention there is provided a system for controlling transactions, the system comprising means for signalling a first transaction message between a first user equipment and a second user equipment, said transaction message being associated with a contract the users of the first and second user equipment are willing to enter, means for signalling to a third user equipment a second transaction message generated based on the first transaction message, processor means at the third user equipment for processing the second transaction message and for determining whether the contract is acceptable, and means for signalling from the third user equipment a third transaction message based the outcome of the determination.

In a more specific form the third transaction message enables the users of the first and second user equipment to proceed in accordance with the contract. The third transaction message may contain a payment in accordance with the contract or control instructions for initiation of a procedure to perform a payment in accordance with the contract. The third transaction message may be signalled to an entity holding an account for the user of the third user equipment. The third transaction message may also contain an indication that the user of the third user equipment approves the contract negotiated between the users of the first and second user equipment.

The first user equipment may generate the second transaction message by attaching to the first transaction message an identification. The second transaction message may include information regarding the identity of the first and/or second user. The third user equipment may perform a check regarding the first and/or second user based on information in the second transaction message.

The third transaction message may contain an authentication associated with the third user equipment or the user of the third user equipment.

The first transaction message may be generated as a response to a request for an offer from the first user equipment.

The first transaction message may comprise a message from the first user equipment to the second user equipment.

At least one of the transaction messages may be communicated via a wireless interface. The first user equipment may be arranged to communicate at least one of the messages via a wireless interface. At least one message may be transported via a data communication network.

According to another aspect of the present invention there is provided a user equipment for provision of control of transactions between a first party and a second party, the user equipment comprising input means for receiving a transaction message, said transaction message being associated with a contract the first and second party are willing to enter and being based on a message signalled between the first and second parties, processor means for processing data included in the transaction message for determining whether the contract between the first and second parties is acceptable and for generating a response to the transaction message based the outcome of the determination, and means for signalling the response.

The embodiments of the invention may provide a feasible solution for control of transactions between two parties. The third party providing the control does not need to be physically present. If an authorisation is required, the authorisation may be done by the third party. Improved security may be provided, especially since a human decision and/or third party intervention may be required in addition to processing of e.g. digital identifications and/or other authorisations and/or authentications. Security features of existing communication systems can be employed in the authorisations.

For better understanding of the present invention, reference will now be made by way of example to the accompanying drawings in which:
Figure 1 shows an embodiment of the present invention;
Figure 2 shows another embodiment of the present invention;
Figure 3 is a flowchart illustrating the operation of one embodiment of the present invention.

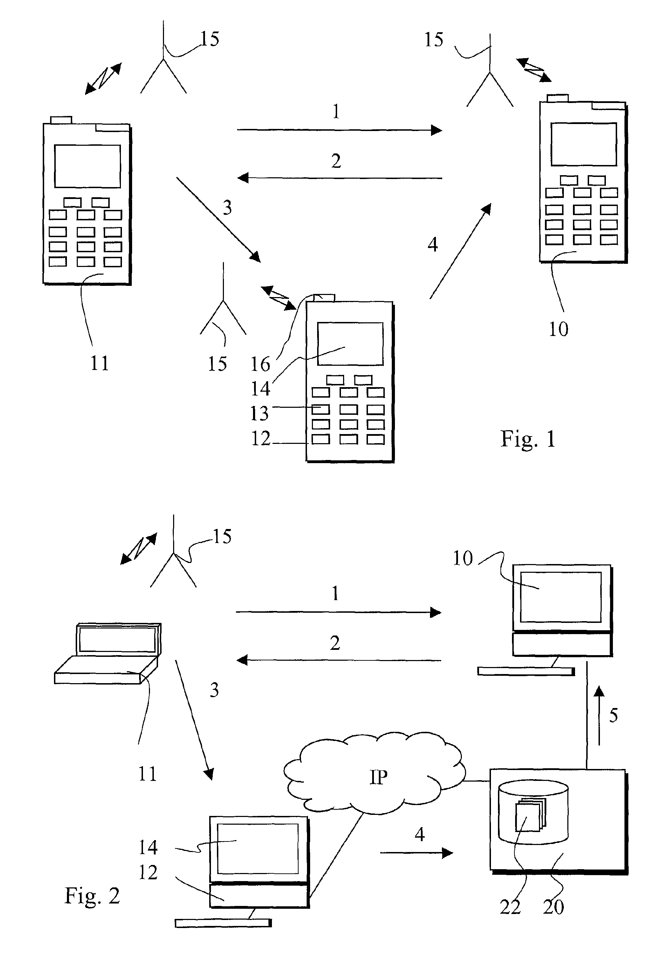

An embodiment of the present invention will now be described with reference to Figure 1 wherein user equipment of three parties 10 to 12 involved in a transaction and signalling between the user equipment associated to that transaction is shown. It shall be appreciated that the users (i.e. the human parties) of the user equipment are not shown for clarity. Thus it shall be appreciated that any reference to any of the user equipment shall be understood as being a reference to the respective party, unless otherwise indicated.

A brief explanation regarding the user equipment that may be used for implementing embodiments of the invention is given first before explaining the operation in accordance with the Figure 1 embodiment.

Each of the user equipment 10 to 12 is adapted to facilitate use thereof for electronic transactions and for exchange of transaction data between the user equipment and a remote party. Possible transaction data processing means may comprise a processor means arranged for processing and/or controlling transactions between the user equipment and other parties. The transaction processor means may be integrated with at least one other processor function of the user equipment. The transaction processor means may alternatively be adapted to process data that associates with the transaction processing function only. A data storage means may also be provided, the storage means being either integrated with the other functions of the user equipment or be assigned solely for the transaction data processing functions. Separation of the transaction functions from other functions of the user equipment may be preferred e.g. for security or usability reasons.

The user equipment of the first party 11 preferably consists of a mobile station. For example, the user equipment 11 may comprise a mobile telephone, as shown in Figure 1, or a portable data processing device that is provided with transceiver means, as shown in Figure 2.

The appropriate user equipment of the second party 10 may comprise any appropriate transaction terminal such as an electronic cashier machine of a shop, a mobile station, as shown in Figure 1, or a computer terminal connected to a data network, as shown in Figure 2, and so on. The only requirement with regard of the user equipment of the second party 10 is that is that the user equipment is capable of processing transaction data and communicating transaction data with another party.

The third party 12 may also be provided with a mobile user equipment (see Figure 1), a computer terminal (see Figure 2) or any other means capable of receiving and sending messages that associate with transactions, as will be described below.

Therefore it shall be appreciated that although Figure 1 shows three mobile user equipment 10 to 12, other type of user equipment may also be used. Especially the second and third parties 10 and 12, respectively, may use any type of appropriate user equipment in the embodiments which are described below with reference to Figures 1 and 2.

In the herein described embodiments the first party 11 is a user of a mobile user equipment. Various forms of the mobile user equipment have become very popular among the general public. The mobile user equipment of the first party 11 is arranged for communication via a wireless interface between the user equipment and a serving base station 15 of a telecommunication system.

A user equipment used by any of the parties may be provided with user interface means comprising a display 14 and input means. The skilled person is familiar with the user interface of e.g. a mobile user equipment or a computer terminal and therefore these will not be described in more detail herein. It is sufficient to note that the input means may be formed by control buttons 13 or they may include e.g. voice activation or touch screen means and so on. A mobile user equipment may be provided with means for communication with the base station transceiver entity 15 of the communication system. The communication means may comprise an external antenna element 16, or a built-in or integrated antenna means. It should be appreciated that antenna means are not an essential requirement in the embodiments of the present invention.

The communication system or elements thereof other than few base stations 15 are not shown for clarity. The skilled person is familiar with the operation and functions of a telecommunication system and base stations and therefore these are not described in any greater detail. It is sufficient to note that a mobile telecommunications system provides mobility for the users thereof by enabling the users to communicate by means of mobile user equipment. Examples of the mobile telecommunication systems providing mobility for the users include, without limiting to these GSM (Global System for Mobile Telecommunications), AMPS (American Mobile Phone System), digital AMPS, GPRS (General Packet Radio Service) and various third generations (3G) systems such as UMTS (Universal Mobile Telecommunication Service), IMTS2000, and I-Phone. Mobility may also be provided by means of a communication system such as the Wireless Local Area Network (WLAN). In a fixed line communication system the terminals are typically connected to a fixed line data network, such as the LAN or to the Internet (for the Internet, see Figure 2).

The user equipment 10 to 12 may each be used for signalling messages that associate with a transaction. Figure 1 shows an embodiment wherein a remote third party 12 makes a payment for a party 10 on behalf of another party 11 based on a message communicated between the first and second parties. In Figure 1 signals 1 to 4 are shown to be transmitted between the user equipment 10 to 12 via a cellular communication system.

More particularly, the user of the first user equipment 11 is a party who wishes to purchase something from the user of the second user equipment 10, i.e. the merchant. The user of the third user equipment 12 is a party who wishes to control the spending of the user of the first user equipment 11. For example, the user of the first user 11 equipment may be a child of the user of the third user equipment 12. The payment is made by means of the user equipment 12 of the third party and based on transaction data received from the user equipment 11 of the buyer.

The buyer may initiate the operation by sending via the communication system a request for an offer to the merchant in message 1. The merchant receives the request and processes it to make an offer. The generated offer may be digitally signed by the merchant. The generated offer message may consist of various fields. For example, fields for the name of the product, price of the product, amount of product, the identity of the merchant and validity period may be provided.

The offer is then sent in a message 2 via the communication system to the first party. The offer is received at the user equipment 11 of the first party. At this stage the offer can be processed in any appropriate manner at the first user equipment 11. An authorisation and/or identification information may be attached to the offer and/or a further message generated based on the offer. For example, the offer may be digitally signed by means of the first user equipment 11.

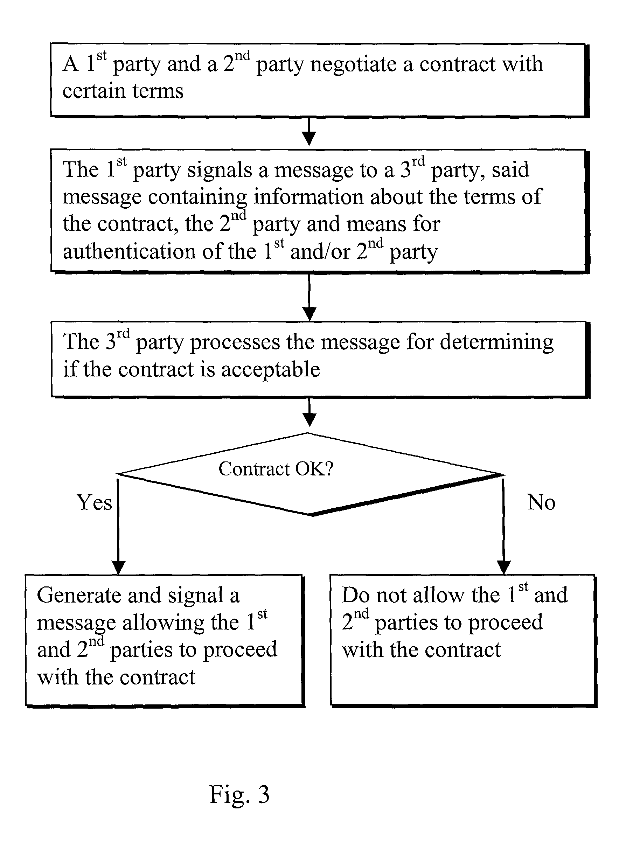

As also shown by the flowchart of Figure 3, the offer is then sent via the communication system to the third party in message 3. After the message is received at the third party user equipment 12 a verification can be accomplished to check that the buyer has signed the offer (or any other message generated based on the offer). The third party user equipment 12 may also verify that the merchant is a trusted party.

After it is determined that the offer is genuine and/or that the merchant can be trusted, the third party may then make a decision whether to accept or reject the offer. Depending on the outcome of this procedure, the third party may initiate a transaction procedure between the third and second user equipment 12 and 10 such that the merchant receives a payment for the purchase. Signalling of the payment message via the communication system is indicated by arrow 4. The payment can be accomplished by means of any appropriate payment protocol.

A great number of various possible protocols for electronic payments (e.g. the SET, EMV, Visa 3D™) are known, and do form as such a part of the invention, and therefore the payment protocols are not explained in any detail herein.

The third user equipment 12 may be provided with appropriate transaction functionality such as the those referred to by the term 'electronic wallet'. An electronic wallet may comprise a credit card type transaction facility or account means containing balance in the form of electronic money. The balance on the wallet may then be deducted from the account means whenever a payment is made.

In other words, if the user of the third user equipment 12 considers the offer as acceptable, he signals by means of his user equipment 12 a message 4 to the merchant which enable the transaction to proceed between the users of the first and second user equipment 11, 10. In this context it shall be understood that the signal may comprise, in addition to transaction data for a direct payment of the purchase, any other control instructions for initiation of a procedure to pay for the purchase by the user of the first user equipment.

If the user of the third user equipment 12 does not agree with the terms of the offer he may reject the offer, e.g. by means of the user interface of the user equipment. The third party may or may not notify the user of the first user equipment 11 of this.

The third party may also send a counteroffer to the merchant. The counteroffer may be signalled via the first user equipment 11 of the buyer or sent directly to the user equipment 10 of the merchant. The merchant may either accept the counteroffer or make a new offer. The communication regarding the counteroffer and/or the new offer by the merchant may be signalled via the first user equipment 11. It is also possible to proceed such that the transaction signalling will now occur directly between the user equipment 12 of the third party and the user equipment 10 of the merchant. The second party user equipment 10 may be provided with an automatic "bargaining" functionality, such as with a code means that accept counteroffers within certain acceptable limits and or makes a new offer based on the original offer and the counteroffer.

Figure 2 shows another embodiment wherein a third party 12 authorises a first party of a transaction (e.g. a buyer) 11 to pay something to a second party (e.g. a merchant) 10. The authorisation is done by the third party user equipment 12. That is, instead of directly making a payment on behalf of the first party, the third party 12 signals instructions based on which such a payment can be made. In Figure 2 these instructions are signalled to a financial institution 20 holding an account 22 wherefrom electronic payments are possible. A typical example of such institution is a bank.

Although this is not always necessary, the user of the first user equipment 11 may send a request for an offer to the user equipment 10 of the second party, as described above. The second party may then respond by sending an offer to the first user equipment 11. A message 3 is generated based on the offer and transmitted from the first user equipment to the third user equipment 12. According to an alternative the message 3 to the third user equipment 12 is generated based on the request and no offer is required.

As above, the message 3 may comprise the offer as such or be based on the offer received from the merchant. The message 3 may also include a digital signature that is attached by the first user equipment or any other security feature, depending on the application. The third party 12 receives the message 3 containing information about the offer and verifies that the message 3 originates from the first party 11 and that the second party 10 can be trusted.

If the third party 12 feels the offer appropriate, he may authorise the purchase with his digital signature. The offer and authorisation is then signalled via the communication system in message 4 to the account holder 20. The authorisation message 4 may include the digital signature of the third user, the offer or other message as received from the buyer and any additional information as may be required. It shall be appreciated that the digital signatures are only an example of a possible authentication technique. The authentication may be accomplished based on any appropriate technique, such as based on symmetric passwords, public or private keys and so on, this being an implementation issue.

Based on the identification information the account holder 20 may then verify that the fist party and the third party are who they claim to be. If the account holder is satisfied, the imbursement is processed. The authentication and other actions in the account holder such as a bank may be done using any appropriate banking service protocols. Since the skilled person is familiar with possible payment procedures, and since these are not a part of the invention, these will thus not be explained in any greater detail herein.

The account holder 20 may then accomplish the payment directly to the second party (e.g. the merchant) 10 by a message 5. After having received confirmation that the payment has been made or that the payment is authorised, the merchant may give the goods to the buyer or provide any other service in accordance with the offer accepted by the third party.

According to a further embodiment a trusted authentication centre is provided. The authentication centre may be arranged to identify the first and second parties on the behalf of the third party. Thus the third party would receive the message 3 together with an indication that the first and second parties are who they claim to be.

In the above described system transactions can be made and/or confirmed or otherwise initiated by a third party without a requirement for him/her to be present at the location where the details of a contract for a transaction is negotiated and/or otherwise agreed.

It shall be appreciated that the above disclosed solution is, in addition to buying goods and/or services from a second party, applicable also in case of any other transactions between two parties, such for use in association with electronic betting applications, in banking services, donations and so on.

An example of such application is given herein in the context of betting. In this example a person (the first party) who wants to make a bet at a betting office (the second party) may signal a message to a second person (the third party) regarding the bet. The bet as such is negotiated between the first person and the betting office, but the first party may offer the third party e.g. with a possibility to join the bet and pay a share of the bet, ask the third party to accept and/or pay the bet, and so on. The message from first party to the third party may also indicate that the third party may forward the offer further to another party.

It shall be appreciated that the above described solutions wherein the third party provides control on contracts negotiated between the first party and the second party in situations wherein the first party can be seen as a buyer and the second party as a seller is not the only possibility. The roles can also be switched such that the third party controls actions of a seller of goods/services. For example, the party to be controlled is an agent (e.g. an estate agent), and the third party is the actual owner of the goods to be sold based on offers from buyers. E.g. in the Figure 1 scenario the agent would send a message 3 by his/hers user equipment 11 based on an offer message 2 from the buyer user equipment 10 to the user equipment 12 of the owner. The owner may then proceed as he/she feels appropriate, e.g. accept the offer, make a counteroffer and so on.

It shall be appreciated that although the above embodiments have been described in the context of a first party mobile user equipment that communicates via a cellular communication system, this invention is also applicable to any other communication system enabling the first party to ask for confirmation, payment and so on in association with a contract the first party wishes to proceed with.

According to an embodiment signalling in response to message from the first party user equipment is routed from the third party 12 to the second party user equipment 11. The first party 11 may then forward appropriate payment message or similar to the second party 10. The first party and second party (and/or the third party) may communicate via a local link, such as a short range radio link. An example of the local links are the short range radio links that are based on the Bluetooth™ protocol. Other possibilities to communicate transaction data to and/or from the user equipment of the first party comprise communication via an infrared link, a WLAN system, or via a fixed line data communication network such as a LAN, the Internet or any intranet application.

The use of local links may be advantageous e.g. in situations wherein the second and third parties cannot communicate transaction data between each other or the second party is not connected to a communication system that provides a possibility to communicate with remote entities. An example of such application is purchase from a mobile trader (e.g. a ice cream trolley) who may only be provided with a Bluetooth™ enabled user equipment.

Furthermore, instead of sending the message 3 requesting for control instructions from the user equipment 11 of the first party to the user equipment 12 of the third party, the message 3 may be communicated from the second party 10 to the third party 12.

Communication between the various entities may be based on any appropriate technique and communication protocol. The possible protocols include, without limiting to these, a Short Message Service message (SMS), WAP (wireless application protocol) messages, email messages, multimedia messages (MMM) or any other messages such as messages that are based on the Internet protocol (IP) or Session Initiation Protocol (SIP).

Examples of the possible means based on which the authorisation can be accomplished include, without limiting to these, a Subscriber Identity Module (SIM), a Number Assignment Module (NAM), and a WAP Identity Module (WIM). The authorisation may also be based on identity codes such as a personal identity number (PIN) or a unique product code assigned for each user equipment, such as the IMEI (International Mobile station Equipment Identity), the international mobile subscriber identity (IMSI) code, various biometry applications and so on.

It is also noted herein that while the above describes exemplifying embodiments of the invention, there are several variations and modifications which may be made to the disclosed solution without departing from the scope of the present invention as defined in the appended claims.

## Claims

1. A method for accomplishing a transaction between user equipment, the method comprising:
signalling a first transaction message between a first user equipment and a second user equipment, said transaction message being associated with a contract the users of the first and second user equipment are willing to enter;
signalling to a third user equipment a second transaction message based on the first transaction message;
processing the second transaction message at the third user equipment and based on the processing determining whether the contract is acceptable; and
signalling from the third user equipment a third transaction message generated based on the outcome of the determination.

2. A method as claimed in claim 1, wherein the third transaction message enables the users of the first and second user equipment to proceed in accordance with the contract.

3. A method as claimed in claim 2, wherein the third transaction message contains a payment in accordance with the contract.

4. A method as claimed in claim 2, wherein the third transaction message contains control instructions for initiation of a procedure to perform a payment in accordance with the contract.

5. A method as claimed in claim 4, wherein the third transaction message is signalled to an entity holding an account for the user of the third user equipment.

6. A method as claimed in claim 2, wherein the third transaction message contains an indication that the user of the third user equipment approves the contract negotiated between the users of the first and second user equipment.

7. A method as claimed in any preceding claim, wherein the first user equipment generates the second transaction message by attaching to the first transaction message an identification.

8. A method as claimed in claim 7, wherein the identification comprises a digital signature, password or other authentication means that can be associated with the first user equipment and/or the user of the first user equipment.

9. A method as claimed in any preceding claim, wherein the second transaction message includes information regarding the identity of the second user.

10. A method as claimed in any preceding claim, wherein the third user equipment performs a check regarding the first and/or second user based on information in the second transaction message.

11. A method as claimed in any preceding claim, wherein the third transaction message contains an authentication associated with the third user equipment or the user of the third user equipment.

12. A method as claimed in any preceding claim, wherein the first transaction message is generated as a response to a request for an offer from the first user equipment.

13. A method as claimed in any of claims 1 to 11, wherein the first transaction message comprises a message from the first user equipment to the second user equipment.

14. A method as claimed in any preceding claim, wherein at least one of the transaction messages is communicated via a wireless interface.

15. A method as claimed in any preceding claim, wherein at least one message is transported via a data communication network.

16. A method as claimed in any preceding claim, wherein the first user equipment communicates at least one of the messages via a wireless interface.

17. A system for controlling transactions, the system comprising:
means for signalling a first transaction message between a first user equipment and a second user equipment, said transaction message being associated with a contract the users of the first and second user equipment are willing to enter;
means for signalling to a third user equipment a second transaction message generated based on the first transaction message;
processor means at the third user equipment for processing the second transaction message and for determining whether the contract is acceptable; and
means for signalling from the third user equipment a third transaction message based the outcome of the determination.

18. A user equipment for provision of control of transactions between a first party and a second party, comprising:
input means for receiving a transaction message, said transaction message being associated with a contract the first and second party are willing to enter and being based on a message signalled between the first and second parties;
processor means for processing data included in the transaction message for determining whether the contract between the first and second parties is acceptable and for generating a response to the transaction message based the outcome of the determination; and
means for signalling the response.

19. A user equipment as claimed in claim 18, comprising means for communication via a wireless interface.
